# EUROPEAN PATENT SPECIFICATION

(11) **EP 0 346 672 B1**
(45) Date of publication and mention of the grant of the patent: **05.04.1995**
(21) Application number: 89109629.9
(22) Date of filing: 29.05.1989
(51) Int. Cl.: H01P 1/205

(54) **Monolithic ceramic filter with bandstop function**
Monolithisches keramisches Filter mit Bandsperrenwirkung
Filtre monolithique céramique fonctionnant comme coupe-bande

(30) Priority: 14.06.1988 US 206384
(43) Date of publication of application: 20.12.1989
(73) Proprietor: MOTOROLA, INC., Schaumburg, IL 60196 (US)
(72) Inventor: Demuro, David Mark, Schaumburg Illinois 60193 (US); Agahi-Kesheh, Darious, Albuquerque New Mexico 87111 (US)
(74) Representative: Dunlop, Hugh Christopher

(56) References cited:
- US-A- 4 382 238
- US-A- 4 423 396
- US-A- 4 703 291
- US-A- 4 740 765
- PATENT ABSTRACTS OF JAPAN vol. 7, no. 284 (E-217)(1429) 17 December 1983,& JP-A-58 161501(MATSUSHITA DENKI SANGYO K.K) 26 September 1983

## Description

### Field of the Invention

The present invention relates generally to radio-frequency (RF) signal filters, and, more particularly, to an improved ceramic signal filter that is particularly well adapted for use in radio transmitting and receiving circuitry.

### Description of the Prior Art

Conventional multi-resonator ceramic filters include a plurality of resonators that are typically foreshortened short-circuited quarter wavelength coaxial transmission lines. The resonators are arranged in a conductive enclosure and may be inductively coupled one to another by apertures in their common walls. Each resonator is typically individually tuned to the desired filter response characteristics.

In transmit/receive duplexer applications, two such ceramic filters are commonly used to provide the conventional filtering functions at the antenna interface. Each such ceramic filter typically includes multiple poles, but each is limited to one zero per filter. This zero is situated at the end of the filter that does not interface to another ceramic filter. This limitation arises because a zero at an end of one ceramic filter coupled to another ceramic filter introduces an unacceptable impedance mismatch at their interface. Consequently, stopband attenuation in the flyback region of the filter's response characteristic cannot be increased with additional zeros. Hence, the overall filter design in constrained.

Because of these problems, circulators are commonly used to intercouple the two ceramic filters in such transmit/receive duplexer applications. Circulators typically include a transmitter port for passing RF energy from the transmit filter to an antenna port and a receiver port for passing RF energy from the antenna port to the receive filter. The receiver port is isolated from the transmitter port with respect to the transmitter energy. Unfortunately, circulators are bulky and expensive and they increase the insertion loss of the duplexer. Also, any mismatch at the antenna port will severely degrade the isolation provided by the circulator.

U.S. Patent Nos. 4,703,291 and 4,740,765 describe dielectric filters comprising a plurality of dielectric resonators.

For these reasons, a ceramic filter is needed which overcomes the foregoing deficiencies.

### Summary of the Invention

In accordance with the present invention there is provided a filter, which may be utilized within a radio communciation device, comprising: a dielectric block comprised of a dielectric material and having top, bottom, end, and side surfaces, said bottom, end, and side surfaces of the dielectric block being substantially covered with a conductive material; at least first, second, third and fourth holes, each having surfaces substantially covered with a conductive material, extending from the top surface of the dielectric block toward the bottom surface thereof and having an opening on the top surface of the dielectric block for producing a transmission line resonator, said openings being disposed at predetermined distances from one another, said first, second, third and fourth holes being coupled to one another through the dielectric block; and input and output coupling means coupled to the first hole and the fourth hole, respectively; said filter further characterized by: plating line means coupled to said first and second holes for providing a bandstop filter function, said plating line means including; first electrode means comprised of conductive material disposed on the top surface of the dielectric block for capacitively coupling to the conductive material covering the first hole; second electrode means comprised of conductive material disposed on the top surface of the dielectric block for capacitively coupling to the conductive material covering the second hole; and transmission line means comprised of conductive material disposed on the top surface of the dielectric block and coupled between the first and second electrode means.

The present invention advantageously provides a ceramic filter that is not limited to one zero for duplexer applications. In addition, the present invention provides a ceramic filter which includes a plurality of zeros adjacent a plurality of poles, the latter of which may be used to interface with a similarly designed filter without requiring a circulator.

An exemplary embodiment of the present invention wil now be described with reference to the acompanying drawings.

### Brief Description of the Drawings

Fig. 1 is a diagram of a RF radio transceiver employing two filters, according to the present invention;
Fig. 2 is an expanded diagram of one of the filters 114 or 118 of Fig. 1, according to the present invention;
Fig. 3 is a circuit model of the filter illustrated in Fig. 2, according to the present invention; and
Fig. 4 is a diagram illustrating the response characteristics of a preferred embodiment of one of the filters 114 or 118 as illustrated and described with Fig. 2.

### Detailed Description of the Preferred Embodiment

The arrangement disclosed in this specification has particular use for filtering RF signals in a radio transceiver. More particularly, the arrangement disclosed herein is directed to employing a pair of ceramic filters to implement a duplexer function in a radio transceiver.

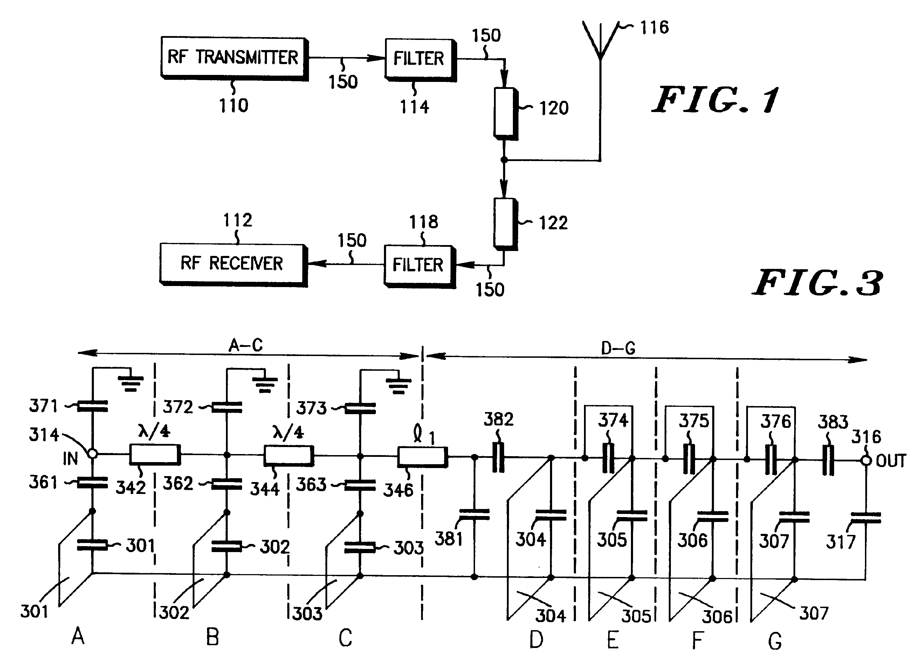

Fig. 1 illustrates such a transceiver. The transceiver includes a conventional RF transmitter 110, and a conventional RF receiver 112. A novel ceramic filter 114, according to the present invention, is used to couple a transmit signal from the RF transmitter 110 to an antenna 116. A similar novel ceramic filter 118 is employed between the antenna 116 and the RF receiver 112 to couple a received RF signal from the antenna 116 to the RF receiver 112. Transmission lines 120 and 122 are respectively disposed between the ceramic filters 114 and 118 and the antenna 116 for proper electrical coupling.

The passband of the filter 114 is centered about the frequency of the transmit signal from RF transmitter 110, while at the same time greatly attenuating the frequency of the received RF signal. In addition, the length of transmission line 120 is selected to maximize its impedance at the frequency of the received signal.

The passband of the filter 118 is centered about the frequency of the received RF signal, while at the same time greatly attenuating the transmit signal. The length of transmission line 122 is selected to maximize its impedance at the transmit signal frequency.

In Figure 2, the filter 114 or 118 is shown in detail, according to the present invention. The filter 114 or 118 includes a block 210 which is comprised of a dielectric material that is selectively plated with a conductive material. The filter 114 or 118 can be constructed of a suitable dielectric material that has low loss, a high dielectric constant and a low temperature coefficient of the dielectric constant. In a preferred embodiment, filter 114 or 118 is comprised of a ceramic compound including barium oxide, titanium oxide and zirconium oxide, the electrical characteristics of which are described in more detail in an article by G. H. Jonker and W. Kwestroo, entitled "The Ternary Systems BzO-TiO₂-SnO₂ and BaO-TiO₂-ZrO₂", published in the Journal of the American Ceramic Society, volume 41, number 10, at pages 390-394, October 1958. Of the ceramic compounds described in this article, the compound in Table VI having the composition 18.5 mole % BaO, 77.0 mole % TiO₂ and 4.5 mole % ZrO₂ and having a dielectric constant of 40 is well suited for use in the ceramic filter of the present invention.

The plating on block 210 is electrically conductive, preferably copper, silver or an alloy thereof. Such plating preferably covers all surfaces of the block 210 with the exception of the top surface 212, the plating of which is discussed below. Of course, other conductive plating arrangements can be utilized. See, for example, those discussed in "Ceramic Bandpass Filter", U.S. Pat. No. 4,431,977, Sokola et al., assignee to the present assignee and incorporated herein by reference.

Block 210 includes seven holes 201-207, which of each extend from the top surface to the bottom surface thereof. The surfaces defining holes 201-207 are likewise plated with an electrically conductive material, depicted by the unshaded area within the respective hole 201-207. Each of the plated holes 201-207 is essentially a transmission line resonator comprised of a short-circuited coaxial transmission line having a length selected for desired filter response characteristics. For additional description of the holes 201-207, reference may be made to U.S. Pat. No. 4,431,977, Sokola et al., supra.

Block 210 in Figure 1 also includes input and output electrodes 214 and 216 for receiving an RF signal and for passing a filtered RF signal, respectively. Although block 210 is shown with seven plated holes 201-207, any number of plated holes can be utilized depending on the filter response characteristics desired. RF signals can be coupled to the electrodes 214 and 216 of the filter 114 or 118 by conventional circuits (depicted generally as 150) such as those discussed in U.S. Pat. No. 4,431,977, Sokola et al., supra.

Coupling between the transmission line resonators, provided by the plated holes 201-207, in Fig. 2 is accomplished through the dielectric material and is varied by varying the width of the dielectric material and the distance between adjacent transmission line resonators. The width of the dielectric material between adjacent holes 201-207 can be adjusted in any suitable regular or irregular manner, such as, for example, by the use of slots, cylindrical holes, square or rectangular holes, or irregular shaped holes.

Furthermore, plated or unplated holes located between the transmission line resonators, provided by holes 201-207, can also be utilized for adjusting the coupling.

According to the present invention, a top surface 212 of the block 210 is selectively plated with a similar electrically conductive material, illustrated by the shaded areas on the top surface 212. The selective plating includes portions of plating 221-227, preferably rectangular shape, surrounding each hole 201-207, respectively. The plating 221-227 is used to couple the transmission line resonators, provided by the holes 201-207, to ground plating 230 on the top surface of the block 210, and also to transmission line plating 240, provided adjacent to plating 221-224.

The transmission line plating 240 includes the previously discussed electrode 214 as well as transmission line sections 242, 244 and 246, and electrodes 252, 253 and 254.

The transmission line plating 240 on the top surface of block 210 of Fig. 2, in accordance with the present invention, distinguishes the function of one portion of the block 210 from another portion. In Fig. 2, block 210 is divided into seven sections by dotted lines, depicted A-G. The transmission line plating 240 separates sections A-C from sections D-G. Sections A-C of the block 210 function as a 3-pole bandstop filter, while sections D-G function as a 4-pole bandpass filter. In accordance with the present invention, electrode 214, transmission line section 242, electrode 252, transmission line section 244 and electrode 253 provide transmission line coupling between their respective transmission line resonators, in each section A-C, to enable such resonators to individually provide a zero to the filter 114 or 118. The transmission line sections 242 and 244 are preferably designed to be a quarter wavelength at the notch frequency. For this reason, transmission line sections 242 and 244 are depicted in a non-linear manner.

The transmission line section 242 is designed at a quarter wavelength act as an impedance inverter (transformer) for an RF signal passing from the transmission line resonator in section A of block 210 to the transmission line resonator in section B of block 210. Similarly, while the transmission line section 244, also at a quarter wavelength, acts as an impedance inverter for the RF signal passing from the transmission line resonator in section B of block 210 to the transmission line resonator in section C of block 210. The transmission line section 246, of length l₁ is unrelated to the quarter wavelength functions of sections 242 and 244, and acts to couple the RF signal in the bandstop section of the block 210 (sections A-C) to the bandpass section of the block 210 (sections D-G).

Referring now to Fig. 3, there is shown an equivalent circuit diagram, less parasitic couplings and capacitances, for the filter 114 or 118 of Fig. 2. The circuit of Fig. 3 includes an input port 314 which corresponds to the input electrode 214 of Fig. 2, and an output port 316 which corresponds to the output electrode 216 of Fig. 2. Similarly, a capacitor 317 of Fig. 3 corresponds to capacitance between the output electrode 216 and the plated sidewall 262 of block 210. Transmission line sections 242, 244 and 246 of Fig. 2 are represented in Fig. 3 by transmission line sections 342, 344 and 346, respectively. The coaxial resonators provided by the plated holes 201-207 of Fig. 2 is represented by the short circuited capacitance arrangements 301-307, respectively, of Fig. 3. Capacitors 361, 362 and 363 of Fig. 3 corresponds to capacitance between the plated portions 221, 222 and 223 and their associated electrodes 214, 252 and 253, respectively. Capacitors 371, 372 and 373 of Fig. 3 correspond to the respective capacitance between the electrodes 214, 252 and 253 and the plated sidewall 262 of block 210.

Focusing now on sections D-G of the block 210, capacitor 381 of Fig. 3 corresponds to capacitance between electrode 254 and the plated sidewall 262 of block 210 of Fig. 2, while capacitor 382 corresponds to capacitance between electrode 254 and the transmission line resonator provided by the plated hole 204. Capacitor 383 of Fig. 3 corresponds to capacitance between the output electrode 216 and the transmission line resonator provided by hole 207 of Fig. 2.

The short circuited transmission lines 390, 391, and 392 represent the magnetic coupling within the block of 210 between each pair of contiguous transmission line resonators. The capacitors 374, 375 and 376 represent the capacitive coupling between the transmission line resonators in the block 210 as caused by the plated portions 225, 226 and 227. The ground plating 230 between the plated portions 225, 226 and 227 controls the value of the capacitance, therebetween. As the width of the ground plating 230 therebetween is increased, such capacitance lessens. Likewise, as the width of the ground plating 230 therebetween is lessen, the capacitance between the transmission line resonators is increased.

In accordance with the present invention, the structure shown in Fig. 2 provides significant advantages over the prior art previously discussed. This structure of Fig. 2 provides a bandstop filter function along with a bandpass filter function in the same coaxial ceramic filter. The bandstop filter function, as represented by the 3-zeros provided by transmission line resonators in sections A, B and C of block 210, provide a substantially increased level of stopband attenuation in the flyback region of the filter response characteristics. Not only does this substantially increase the filter's selectivity, it enables two such filters to be directly intercoupled without using a circulator. This intercoupling can be implemented using the nonzero end of the filter to intercoupling the two filters, thus providing for the previously discussed RF transceiver duplexer function.

In Fig. 2, a dashed vertical line 290 is depicted to indicate that the sections A, B and C of the block 210 can operate as an independent filter. To implement such an independent filter, block 210 is truncated at the dotted line 290, the new sidewall caused by the truncation is conductively plated as are the other sidewalls, the transmission line section 246 is removed and the electrode 253 acts as the output electrode. In this manner, the ceramic filter of Fig. 2 acts as an independent multiple zero bandstop filter.

Tuning the various capacitances depicted in Fig. 2 and illustrated in Fig. 3 can be accomplished by changing the amount of plating 221-227 or 230 on the top surface 212 of the block 210. For example, the plating portion 221 of Fig. 2 can be trimmed to decrease the value of capacitor 371 of Fig. 3. Alternatively, the value of capacitor 371 can be altered by adding or trimming the ground plating 230 adjacent the plating portion 221.

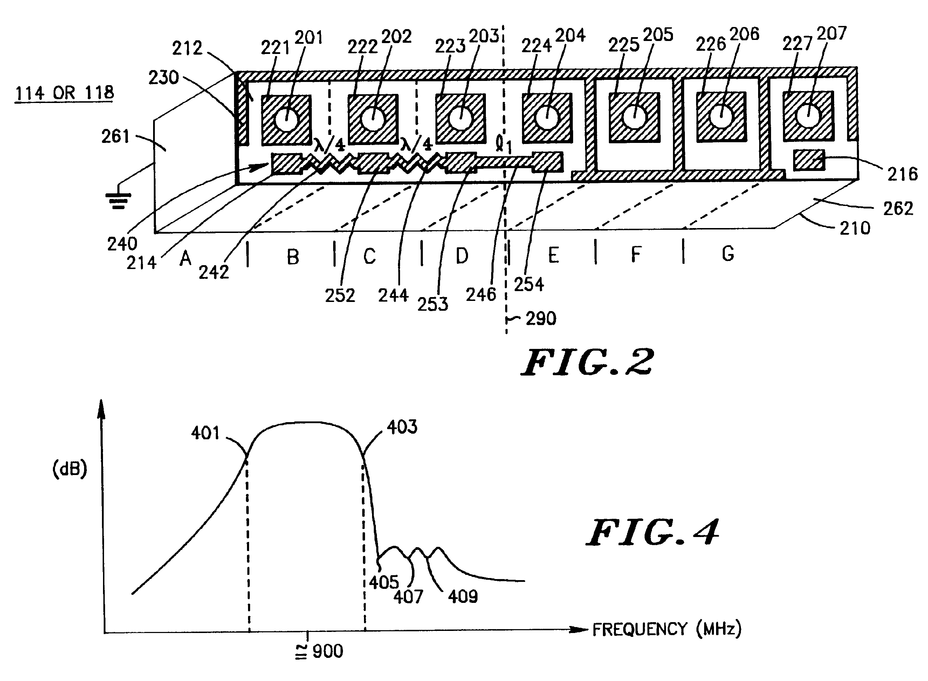

Referring now to Fig. 4, there is shown a diagram illustrating filter response characteristics for a preferred embodiment of a filter designed as illustrated by Fig. 2. On a vertical axis, the through-transmission signal strength is shown in decibels. On the horizontal axis, the frequency is depicted in megahertz. As the diagram in Fig. 4 illustrates, the overall function of the filter is of a passband nature centered at approximately 900 MHz. The passing of frequencies between points 401 and 403 in Fig. 4 is provided by the passband function of the filter in Fig. 2. Specifically, sections D-G of block 210 in Fig. 2 provide this passing function. Sections A-C of block 210 in Fig. 2, each providing a zero in the filter response characteristics, represent the notches 405, 407 and 409 in the diagram of Fig. 4.

## Claims

1. A filter comprising:
a dielectric block (210) comprised of a dielectric material and having top, bottom, end, and side surfaces, said bottom, end, and side surfaces of the dielectric block being substantially covered with a conductive material;
at least first, second, third and fourth holes (221, 222, 226, 227), each having surfaces substantially covered with a conductive material, extending from the top surface of the dielectric block toward the bottom surface thereof and having an opening on the top surface of the dielectric block for producing a transmission line resonator, said openings being disposed at predetermined distances from one another, said first, second, third and fourth holes being coupled to one another through the dielectric block; and
input and output coupling means (214, 216) coupled to the first hole and the fourth hole, respectively;
said filter characterized by:
plating line means coupled to said first and second holes for providing a bandstop filter function, said plating line means including;
first electrode means (214) comprised of conductive material disposed on the top surface of the dielectric block for capacitively coupling to the conductive material covering the first hole;
second electrode means (252) comprised of conductive material disposed on the top surface of the dielectric block for capacitively coupling to the conductive material covering the second hole; and
transmission line means (242) comprised of conductive material disposed on the top surface of the dielectric block and coupled between the first and second electrode means.

2. A filter according to claim 1, wherein said dielectric block includes a fifth hole between said second and third holes, and said plating means includes third electrode means (253) comprised of conductive material disposed on the top surface of the dielectric block for capacitively coupling to the conductive material covering the fifth hole; and second transmission line means (244) comprised of conductive material disposed on the top surface of the dielectric block and coupled between the second and third electrode means.

3. A filter according to claim 1 or 2, wherein a portion of the conductive material covering each of the first, second, third and fourth holes extends onto the top surface of the dielectric block and capacitively couples to the conductive material on at least one of the sides of the dielectric block.

4. A filter according to claim 3, wherein said portions of the conductive material extending from the first, second, third and fourth holes are rectangular in shape.

5. A filter according to any of the preceding claims, wherein said transmission line means is a quarter wave length transmission line.

6. A filter according to any of the preceding claims, wherein said transmission line means is a non-linear line of conductive material of predetermined width.

7. An RF radio transceiver comprising a filter according to any preceding claim.

## Patentansprüche

1. Ein Filter umfassend:
einen dielektrischen Block (210), der ein dielektrisches Material aufweist und eine obere Fläche, eine untere Fläche, sowie End- und Seitenflächen hat, wobei die untere Fläche, die End- und Seitenflächen des dielektrischen Blocks im wesentlichen mit einem leitenden Material bedeckt sind,
wenigstens ein erstes, ein zweites, ein drittes und ein viertes Loch (221, 222, 226, 227), von denen jedes eine im wesentlichen mit leitendem Material bedeckte Oberfläche hat, sich von der oberen Fläche des dielektrischen Blocks in Richtung zur unteren Fläche desselben erstreckt und eine Öffnung auf der oberen Fläche des dielektrischen Blocks hat, so daß ein Übertragungsleitungsresonator geschaffen wird, wobei die Öffnungen mit vorbestimmten Abständen voneinander angeordnet sind, das erste, das zweite, das dritte und das vierte Loch durch den dielektrischen Block aneinander gekoppelt sind, und
Eingangs- und Ausgangskopplungseinrichtungen (214, 216), die an das erste bzw. das vierte Loch gekoppelt sind,
wobei das Filter
**gekennzeichnet ist durch**
eine Platierungsleitungseinrichtung, die an das erste und zweite Loch gekoppelt ist, so daß eine Bandsperrfilterfunktion geschaffen wird, wobei die Platierungseinrichtung umfaßt
eine erste Elektrodeneinrichtung (214), die leitendes Material aufweist, das auf der oberen Fläche des dielektrischen Blocks zur kapazitiven Kopplung an das das erste Lock bedekkende, leitende Material angeordnet ist,
eine zweite Elektrodeneinrichtung (252), die leitendes Material aufweist, das auf der oberen Fläche des dielektrischen Blocks zur kapazitiven Kopplung an das das zweite Loch bedekkende, leitende Material angeordnet ist, und
eine Übertragungsleitungseinrichtung (242), die leitendes Material aufweist, das auf der oberen Fläche des dielektrischen Blocks angeordnet ist und zwischen die erste und die zweite Elektrodeneinrichtung gekoppelt ist.

2. Ein Filter nach Anspruch 1, worin der dielektrische Block ein fünftes Loch zwischen dem zweiten und dem dritten Loch umfaßt und die Platierungseinrichtung eine dritte Elektrodeneinrichtung (253) umfaßt, die leitendes Material aufweist, das auf der oberen Fläche des dielektrischen Blocks zur kapazitiven Kopplung an das das fünfte Loch bedeckende leitende Material angeordnet ist, und eine zweite Übertragungsleitungseinrichtung (244), die leitendes Material aufweist, das auf der oberen Fläche des dielektrischen Blocks angeordnet ist und zwischen die zweite und die dritte Elektrodeneinrichtung gekoppelt ist.

3. Ein Filter nach Anspruch 1 oder 2, worin ein Abschnitt des leitenden Materials, das jedes erste, zweite, dritte und vierte Loch bedeckt, sich auf die obere Fläche des dielektrischen Blocks erstreckt und kapazitiv an das leitende Material auf wenigstens einer der Seiten des dielektrischen Blocks koppelt.

4. Ein Filter nach Anspruch 3, worin die sich aus dem ersten, dem zweiten, dem dritten und dem vierten Loch erstreckenden Abschnitte des leitenden Materials von rechteckiger Form sind.

5. Ein Filter nach einem der vorangegangenen Ansprüche, worin die Übertragungsleitungseinrichtung eine λ/4 Übertragungsleitung ist.

6. Ein Filter nach einem der vorangegangenen Ansprüche, worin die Übertragungsleitungseinrichtung eine nicht lineare Leitung aus leitendem Material mit vorbestimmter Breite ist.

7. Ein RF-Radiotransceiver aufweisend einen Filter nach einem der vorangegangenen Ansprüche.

## Revendications

1. Filtre comprenant :
un bloc diélectrique (210) constitué d'un matériau diélectrique et comportant des surfaces supérieure, inférieure, d'extrémité et latérale, lesdites surfaces inférieure, d'extrémité et latérale du bloc diélectrique étant sensiblement couvertes d'un matériau conducteur ;
au moins des premier, deuxième, troisième et quatrième trous (221, 222, 226, 227), chacun ayant des surfaces sensiblement couvertes d'un matériau conducteur, s'étendant à partir de la surface supérieure du bloc diélectrique vers sa surface inférieure, et ayant une ouverture à la surface supérieure du bloc diélectrique pour produire un résonateur de ligne de transmission, lesdites ouvertures étant disposées à des distances prédéterminées les unes des autres, lesdits premier, deuxième, troisième et quatrième trous étant couplés les uns aux autres à travers le bloc diélectrique ;
des moyens de couplage d'entrée et de sortie (214, 216) couplés respectivement au premier trou et au quatrième trou ;
ledit filtre étant caractérisé par :
un moyen de ligne de placage couplé auxdits premier et deuxième trous pour fournir une fonction de filtre coupe-bande, ledit moyen de ligne de placage comprenant :
un premier moyen d'électrode (214) constitué de matériau conducteur disposé sur la surface supérieure du bloc diélectrique pour un couplage par capacité au matériau conducteur couvrant le premier trou ;
un deuxième moyen d'électrode (252) constitué de matériau conducteur disposé sur la surface supérieure du bloc diélectrique pour un couplage par capacité au matériau conducteur couvrant le deuxième trou ; et
un moyen de ligne de transmission (242) constitué d'un matériau conducteur disposé sur la surface supérieure du bloc diélectrique et couplé entre les premier et deuxième moyens d'électrode.

2. Filtre suivant la revendication 1, dans lequel ledit bloc diélectrique comporte un cinquième trou situé entre lesdits deuxième et troisième trou, et ledit moyen de placage comprenant un troisième moyen d'électrode (253) constitué de matériau conducteur disposé sur la surface supérieure du bloc diélectrique pour un couplage par capacité au matériau conducteur couvrant le cinquième trou ; et un deuxième moyen de ligne de transmission (244) constitué de matériau conducteur disposé sur la surface supérieure du bloc diélectrique et couplé entre le deuxième et le troisième moyen d'électrode.

3. Filtre suivant la revendication 1 ou 2, dans lequel une partie du matériau conducteur couvrant chacun des premier, deuxième, troisième et quatrième trous s'étend sur la surface supérieure du bloc diélectrique et s'accouple par capacité au matériau conducteur se trouvant sur au moins l'une des faces du bloc diélectrique.

4. Filtre suivant la revendication 3, dans lequel lesdites parties du matériau conducteur s'étendant depuis les premier, deuxième, troisième et quatrième trous sont de forme rectangulaire.

5. Filtre suivant l'une quelconque des revendications précédentes, dans lequel ledit moyen de ligne de transmission est une ligne de transmission en quart d'onde.

6. Filtre suivant l'une quelconque des revendications précédentes, dans lequel ledit moyen de ligne de transmission est une ligne en matériau conducteur non linéaire de largeur prédéterminée.

7. Emetteur-récepteur radio RF comprenant un filtre suivant l'une quelconque des revendications précédentes.
